# EUROPEAN PATENT SPECIFICATION

(11) **EP 3 555 216 B1**
(45) Date of publication and mention of the grant of the patent: **08.04.2020**
(21) Application number: 18762873.0
(22) Date of filing: 10.09.2018
(51) Int. Cl.: C09D 11/00, C09D 11/10, C09D 11/101, C09D 11/102

(54) **ENERGY CURING INTAGLIO INK**
ENERGIEHÄRTENDE TIEFDRUCKTINTE
ENCRE EN CREUX DE DURCISSEMENT PAR ÉNERGIE

(30) Priority: 12.09.2017 EP 17190704
(43) Date of publication of application: 23.10.2019
(73) Proprietor: Gleitsmann Security Inks GmbH, 12059 Berlin (DE)
(72) Inventor: BORGMANN, Ursula, 85567 Grafing (DE); MICHEEL, Jörg, 12103 Berlin (DE)
(74) Representative: Henkel & Partner mbB
(86) International application number: PCT/EP2018/074327
(87) International publication number: WO 2019/052951

(56) References cited:
- EP-A1- 3 081 606
- WO-A1-00/66669
- WO-A1-2011/084833

## Description

The present invention relates to an energy curing intaglio ink comprising a binder and at least one photoinitiator to initiate the polymerization of the binder upon irradiation by electromagnetic radiation or electron beam radiation.

The intaglio printing process is a comparable old printing technique, which has been developed in the nineteenth century from the copperplate engraving. It is a printing technique, in which the elements to be imaged are present as depressions in the printing form, which is often used in the form of an intaglio cylinder. The entire intaglio cylinder is inked before the printing and the excess intaglio ink is then removed with a wiper so that the intaglio ink is only present in the depressions, but not on the lands, which are located between the depressions. For this purpose, as wiper a wiping roller is placed around the intaglio cylinder of the intaglio printing press and wipes off the excess intaglio ink from the intaglio cylinder. At the side opposite to the intaglio cylinder, the wiping roller is partially immersed during the process in a wiping solution, which is contained in a wiping-solution tank, so that the intaglio ink adhering to the immersed portion of the wiping roller is dispersed into the solution allowing the wiping roller to continue to remove excess intaglio ink from the intaglio cylinder. It is also possible to clean the wiping cylinder by spraying with wiping solution. After removal of the excess intaglio ink, the intaglio ink is transferred by means of a high contact pressure from the intaglio cylinder to the substrate.

Intaglio printing is typically used for mass-printed materials, such as magazines, catalogues, folding boxes, foil packings and the like. Furthermore, it is also used for security printed matters, such as bank notes, passports and the like, since this printing technique allows to produce printed substrates with an unique hand feeling and because this technique requires special printing machines, which hinders an easy reproduction by a third party.

Often, intaglio inks are formulated so as to be cured by UV radiation, because UV curing allows a fast and almost instantaneous drying of the printed intaglio ink film on the substrate and thus allows a high production speed. In order to achieve a sufficiently high sensitivity to UV radiation, such intaglio inks contain a photoinitiator, which forms free radicals under the influence of the UV radiation , which in turn initiate the curing reaction.

EP 1 260 563 A1 discloses an intaglio ink, which includes a binder, a photoinitiator, pigments, filler and other additives, such as photosensitizers, photostabilizers, emulsifiers and security pigments. The binder contains a first binder compound, which is selected from the group of water-soluble or water-thinnable acrylate oligomers and preferably is an urethane acrylate oligomer, and a second binder compound, which is selected from the group comprising water-soluble or water-thinnable polyethylene glycol diacrylate or polyethoxylated polyol triacrylate monomers.

EP 2 489 709 A1 describes an energy curable intaglio printing ink, which comprises at least an ultraviolet curable composition, an oxidation polymerizable composition, a photopolymerization initiator, an oxidation polymerization catalyst and a pigment, wherein the ultraviolet curable composition comprises an acid-modified epoxy-acrylate prepared by reacting a polybasic acid anhydride with an epoxy-acrylate obtained by reacting an acrylate, having two or more acryloyl groups and one carboxyl group in one molecule, with an epoxy compound having two or more epoxy rings in one molecule.

KR 10-1110623 relates to an intaglio ink composition, which comprises an oligomer selected from water-soluble urethane acrylate oligomers or unsaturated ester oligomers, at least one kind of water-soluble monomer selected from 1,6-hexanediacrylate, tripropylene glycol diacrylate, trimethylopropane triacrylate, pentaerythritol triacrylate, pentaetriol tetraacrylate, dipentaerythriol pentaacrylate and polyethylene glycol diacrylate, pigment, filler, photoinitiator, photostabilizer, emulsifier and wax. A maleic resin with an acid number of 50 to 70 may be included in the intaglio ink composition.

An ink has to meet certain demands, in order to be useable as intaglio ink. More specifically, it has to provide a suitable viscosity, in order to remain in the depressions of the printing form until the moment of printing, but nevertheless to easily transfer to the substrate during the printing. In addition, intaglio inks - in particular in the case of being used for preparing security printed matters, such as bank notes - require to have an excellent chemical and mechanical resistance so as to withstand diverse materials and conditions, which they may be subjected to. Moreover, they need to have a suitable gloss, a high adhesion to the substrate and an excellent abrasion resistance. A further particular important requirement for intaglio inks is a high dispersibility in wiping solution so that it can be easily and fast removed from a wiping roller. However, it is not easy to formulate an intaglio ink with a desired colour and suitable gloss, which also meets the further requirements in a well-balanced manner. More specifically, often an improvement of the dispersibility of an intaglio ink in a wiping solution leads to a decrement of the chemical resistance of the intaglio ink and vice versa.

In view of this, the object underlying the present invention is to provide an energy curing intaglio ink, which has an excellent dispersibility in wiping solution as well as an excellent chemical resistance.

In accordance with the present invention, this objective is achieved by providing an energy curing intaglio ink comprising a binder and at least one photoinitiator to initiate the polymerization of the binder upon irradiation by electromagnetic radiation or electron beam radiation, wherein the binder comprises:
a) at least one modified rosin having an acid number of at least 50 mg KOH/g, wherein the modified rosin is obtainable by reacting a mixture including rosin with at least one monounsaturated dicarboxylic acid and/or dicarboxylic acid anhydride and/or dicarboxylic half-ester selected from the group consisting of maleic acid, maleic acid anhydride, fumaric acid, fumaric acid anhydride, half-esters of the aforementioned acids and arbitrary combinations of two or more of the aforementioned substances and optionally a polyhydric alcohol, e.g. propylene glycol,
b) at least one tri-functional or higher-functional aliphatic urethane acrylate oligomer having a weight average molecular weight of 800 to 5,000 g/mol and
c) at least one polyester acrylate, which has a solubility of at most 60 g/l in a wiping solution consisting of 0.8% by weight of sodium hydroxide, 0.7% by weight of sulfated castor oil with a sulfatization degree of 75%and remainder to 100% by weight of distilled water.

This solution is based on the surprising finding that by adding a modified rosin having an acid number of at least 50 mg KOH/g, wherein the modified rosin is obtainable by reacting a mixture including rosin with at least one monounsaturated dicarboxylic acid and/or dicarboxylic acid anhydride and/or dicarboxylic half-ester selected from the group consisting of maleic acid, maleic acid anhydride, fumaric acid, fumaric acid anhydride, half-esters of the aforementioned acids and arbitrary combinations of two or more of the aforementioned substances and optionally a polyhydric alcohol, as part of the binder into an energy curing intaglio ink, the dispersibility of the intaglio ink in wiping solution can be significantly increased. This significant increment of the dispersibility of the intaglio ink in wiping solution allows to even include a polyester acrylate with no or at most low solubility in wiping solution (i.e. the polyester acrylate is neither water-soluble nor water-thinnable) into the intaglio ink, wherein the intaglio ink nevertheless (i.e. despite the addition of the polyester acrylate) has an excellent dispersibility in wiping solution, and wherein the addition of the polyester acrylate with no or at most low solubility in wiping solution improves the chemical resistance of the intaglio ink and furthermore imparts excellent response to UV light. Without wishing to be bound to any theory it is considered that the acid groups of the modified rosin having an acid number of at least 50 mg KOH/g contribute to the high precipitation capacity for the dissolved compounds in the wiping solution. It is further considered that the modified rosin having an acid number of at least 50 mg KOH/g does not act like an emulsifier, but that its impact originates from Van der Waals interactions of the ester and carboxylic groups with the polar groups of the polyester acrylate. The energy curing intaglio ink in accordance with the present invention is particularly suitable to be used with a wiping solution consisting of 0.5 to 1.2% by weight of sodium hydroxide, 0.5 to 1.2% by weight of sulfated castor oil with a sulfatization degree of 75%, such as the commercial product Tuerkisch Rotoel/sulfatiertes Rizinusöl(Natriumsalz)SC075% of the supplier Mercur Handel), and remainder to 100% by weight of distilled water.

The term rosin denotes naturally occurring colophony.

Furthermore, the term polyhydric alcohol denotes any di-functional or higher-functional alcohol.

Preferably, the at least one polyester acrylate has a solubility in the wiping solution of at most 60 g/l, more preferably of at most 10 g/l, even more preferably of at most 5 g/l, even more preferably of at most 1 g/l, yet more preferably of at most 0.2 g/l, still more preferably of at most 0.05 g/l and most preferably of at most 0.001 g/l. In tendency, the less the solubility of the at least one polyester acrylate in the wiping solution is, the more hydrophobic the at least one polyester acrylate is and the more improvement of the chemical resistance of the energy curing intaglio ink is achieved.

In accordance with the present invention, the solubility of resins and particularly the solubility of polyester acrylate in the wiping solution is measured as follows: 5.0 g sample is weighed into an Erlenmeyer flask and is then mixed homogeneously with 4 ml of wiping solution with a spatula at room temperature. The remaining substance on the spatula is stripped off with a magnetic stirrer bar, which is then added to the Erlenmeyer flask. While stirring with a magnetic stirrer, wiping solution is added dropwise with a burette until the solution in the Erlenmeyer flask becomes clear at room temperature. After that, the solubility of polyester acrylate in the wiping solution is calculated by calculating the ratio of weighed polyester acrylate divided by the volume of added wiping solution and then by recalculating this ratio to 1 I of wiping solution.

In order to assure an excellent chemical resistance of the energy curing intaglio ink and furthermore an excellent response of the energy curing intaglio ink to UV light, it is proposed in a further development of the idea of the present invention that the content of the at least one polyester acrylate, calculated on solid content if a diluted polyester acrylate is used, is 5 to 30% by weight, more preferably 5 to 25% by weight, even more preferably 5 to 20% by weight, still more preferably 10 to 17.5% by weight and most preferably about 15% by weight based on 100% by weight of the energy curing intaglio ink.

Particularly good results are obtained for the energy curing intaglio ink in accordance with the present invention, when the at least one polyester acrylate is for example Ebecryl 870, Sartomer CN 293, Sartomer CN 296, Photomer 5443 (IGM resins), Photomer 5450, or other comparable fatty acid modified polyester polyacrylates.

Preferably, the at least one polyester acrylate of the energy curing intaglio ink in accordance with the present invention has a hydroxyl number of 10 to 150 mg KOH/g.

In accordance with the present invention the hydroxyl number and particularly the hydroxyl number of polyester acrylate is measured as follows: Two samples are prepared, wherein for each of these samples 10 ml of acetyl chloride and 90 ml toluene are mixed in 250 ml iodometric flasks, whereupon the iodometric flasks are stoppered and chilled by keeping the flasks for 10 min in an ice bath. Then, 4 ml of pyridine are carefully added to each of the flasks so as to avoid the vapor loss. Again, the flasks are chilled for 10 min in an ice bath. One of these samples is used as blank sample, whereas into the other sample, which is actually the test sample, 1 to 2 g of the material (polyester acrylate) to be measured are accurately weighed in, whereupon the obtained mixture is mixed well. Then, the flask neck of the test sample is sealed and stoppered with rubber band and warmed on a water bath at a temperature of 55°C for 45 min. Thereafter, the contents of both flasks, i.e. of the blank sample as well as of the test sample, are cooled, then 100 ml distilled water are added thereto and the flasks are shaken well. Afterwards, the contents of both flasks are titrated with 0.5 N aqueous KOH solution using phenolphthalein indicator until the mixtures are colourless to pink. The hydroxyl number is calculated according to the following formula:
Hydroxyl number = ((28.055 x (ml aqueous KOH solution added to the blind sample - ml aqueous KOH solution added to the test sample) x titer) / g of the material (polyester acrylate) weighed in) + acid number of the material (polyester acrylate) weighed in.

As set out above, the addition of a modified rosin having an acid number of at least 50 mg KOH/g, wherein the modified rosin is obtainable by reacting a mixture including rosin with at least one monounsaturated dicarboxylic acid and/or dicarboxylic acid anhydride and/or dicarboxylic half-ester selected from the group consisting of maleic acid, maleic acid anhydride, fumaric acid, fumaric acid anhydride, half-esters of the aforementioned acids and arbitrary combinations of two or more of the aforementioned substances and optionally a polyhydric alcohol, e.g. propylene glycol, as part of the binder into the energy curing intaglio ink leads to a significant increase of the dispersibility of the intaglio ink in wiping solution and in particular in a wiping solution consisting of 0.5 to 1.2% by weight of sodium hydroxide, 0.5 to 1.2% by weight of sulfated castor oil with a sulfatization degree of 75%, such as the commercial product Tuerkisch Rotoel/sulfatiertes Rizinusöl(Natriumsalz)SC075% of the supplier Mercur Handel), and remainder to 100% by weight of distilled water. Good results are in particular achieved, when the at least one modified rosin has an acid number of at least 60 mg KOH/g, preferably of at least 70 mg KOH/g, more preferably of at least 80 mg KOH/g and most preferably of at least 85 mg KOH/g.

In accordance with the present invention, the acid number and particularly the acid number of the modified rosin is measured as follows: As solvent for the measurement, a mixture of 2 parts of toluene and 1 part of ethanol is prepared by mixing respective volumes of toluene and ethanol in a glass beaker. Afterwards, an accurate quantity of about 2,0 g of the material (modified rosin) to be measured is weighed in with an accuracy of +/- 0.01 g into 25 ml of the prepared solvent mixture of 2 parts of toluene and 1 part of ethanol. The material is dissolved at room temperature or, if it does not dissolve at room temperature, at 60°C. Then, 2 to 3 drops of phenolphthalein indicator are added and the mixture is titrated against 0.5 N ethanolic KOH solution in a burette until permanent light pink colour is obtained for about 30 sec. The acid value is calculated according to the following formula:
Acid value = (28.055 x ml ethanolic KOH solution added) / g of the material (modified rosin) weighed in.

Further preferably, the at least one modified rosin of the energy curing intaglio ink in accordance with the present invention has an acid number of at most 300 mg KOH/g, more preferably of at most 200 mg KOH/g, even more preferably of at most 150 mg KOH/g and most preferably of at most 100 mg KOH/g.

Thus, it is particularly preferred if the at least one modified rosin of the energy curing intaglio ink in accordance with the present invention has an acid number between 60 and 300 mg KOH/g, more preferably between 70 and 200 mg KOH/g, even more preferably between 80 and 150 mg KOH/g and most preferably between 85 and 100 mg KOH/g, such as about 90 mg KOH/g.

In order to sufficiently improve the dispersibility of the intaglio ink in wiping solution, it is suggested in a further development of the idea of the present invention that the content of the at least one modified rosin in the intaglio ink is 1 to 30% by weight, preferably 2 to 20% by weight and most preferably 5 to 15% by weight, such as about 10% by weight based on 100% by weight of the energy curing intaglio ink.

In accordance with a particular preferred embodiment of the present invention, the at least one modified rosin of the energy curing intaglio ink in accordance with the present invention is obtainable by reacting a mixture including i) rosin with ii) at least one monounsaturated dicarboxylic acid and/or dicarboxylic acid anhydride and/or half-ester selected from the group consisting of maleic acid, maleic acid anhydride, fumaric acid, fumaric acid anhydride, half-esters of the aforementioned acids and arbitrary combinations of two or more of the aforementioned substances, iii) at least one di-functional or higher-functional alcohol, wherein the at least one di-functional or higher-functional alcohol is preferably selected from the group consisting of ethylene glycol, propylene glycol, butylene glycol, pentylene glycol, hexylene glycol, glycerol, trimethylolpropane, di-trimethylolpropane, pentaerythriol, dipentaerythriol and arbitrary combinations of two or more of the aforementioned substances and iv) optionally at least one phenol compound.

Particularly good results are obtained for the energy curing intaglio ink in accordance with the present invention, when the at least one modified rosin is obtainable by reacting a mixture including:
- 30-60% by weight, preferably 35-55% by weight and more preferably 40-50% by weight of component i),
- 20-50% by weight, preferably 25 to 45% by weight and more preferably 25 to 40% by weight of component ii),
- 10-50% by weight, preferably 15-40% by weight and more preferably 20 to 30% by weight of component iii) and optionally
- 1-30% by weight, preferably 5-25% by weight and more preferably 5-20 by weight of component iv).

Moreover, it is preferred that the modified rosin in accordance with the present invention has a weight average molecular weight of 100 to 10,000 g/mol, more preferably of 400 to 5,000 g/mol, even more preferably of 600 to 2,000 g/mol and most preferably of 700 to 1,000 g/mol.

In accordance with the present invention, the weight average molecular weight and in particular the weight average molecular weight of the modified rosin and of the at least one tri-functional or higher-functional aliphatic urethane acrylate oligomer is measured with gel permeation chromatography (GPC). Preferably, the GPC is performed with three GPC columns used together in sequence, namely in particular as column-1: PSS DSV Analytical 50 Å, dimension 8 x 300 mm, particle size: 5 µm, distributed by Polymer Standard Services GmbH; column-2: PSS DSV Analytical 1000 Å, dimension 8 x 300 mm, particle size: 5 µm, distributed by Polymer Standard Services GmbH, and column-3: PSS DSV Analytical 100.000 Å, dimension 8 x 300 mm, particle size: 5 µm, distributed by Polymer Standard Services GmbH. Further preferably, the following settings are used:
Sample preparation: 1% solution of Resin in tetrahydrofuran (THF)
Instrument Settings:
   Pump flow: 1 ml/minute,
   Injection volume: 100 µl,
   Column oven temperature: 30 °C,
   RI detector temperature: 37 °C.

For the GPC, for instance a device from the Agilent 1200-series distributed by Agilent Technologies may be used.

In addition, it is preferred that the modified rosin in accordance with the present invention has a melting point of at least 50°C, preferably of 60 to 150°C, more preferably of 70 to 100°C.

In a further development of the idea of the present invention it is proposed that the at least one modified rosin of the energy curing intaglio ink in accordance with the present invention does not react with UV radiation. Inert resins in the ink formulation enhances the fastnesses of the printed ink, reduces shrink during the chemical curing process and increases adhesion.

The property of being not reactable with UV radiation may be achieved, when the double bonds of the at least one modified rosin are sterically hindered so that that they cannot participate in the polymerisation under UV radiation.

For production of the energy curing intaglio ink it is further preferred that the at least one modified rosin of the energy curing intaglio ink in accordance with the present invention can be dissolved in acrylic monomers or acrylic diluents like polyether-400-diacrylate in the ratio of 1:100 to 5:1, preferably of 1:10 to 4:1 and more preferably of 1:5 to 2:1.

The third essential component of the energy curing intaglio ink in accordance with the present invention is the at least one tri-functional or higher-functional aliphatic urethane acrylate oligomer having a weight average molecular weight of 800 to 5,000 g/mol. On account of the tri-functionality or higher-functionality of the aliphatic urethane acrylate oligomer, a dense network of the binder is formed, which assures good chemical properties of the intaglio ink, such as in particular an excellent adherence to typical substrates as well as an suitable gloss.

In order to achieve the aforementioned effects to a sufficient degree, it is suggested in a further development of the idea of the present invention that the solid content of the at least one tri-functional or higher-functional aliphatic urethane acrylate oligomer is 1 to 20% by weight, more preferably 1 to 15% by weight and most preferably 5 to 15% by weight, such as about 10% by weight, based on 100% by weight of the energy curing intaglio ink. These numbers are based on the amount of active aliphatic urethaneacrylate.

Good results are in particular obtained, when the at least one tri-functional or higher-functional aliphatic urethane acrylate oligomer has a weight average molecular weight of 1,000 to 4,000 g/mol, more preferably of 2,000 to 3,000 g/mol and most preferably of 2,250 to 2,750 g/mol, such as of about 2,500 g/mol.

It is furthermore preferred that the at least one tri-functional or higher-functional aliphatic urethane acrylate oligomer of the energy curing intaglio ink in accordance with the present invention has an acid number of 1 to 100 mg KOH/g, more preferably of 2 to 50 mg KOH/g, even more preferably of 5 to 20 mg KOH/g and most preferably of 5 to 15 mg KOH/g.

The polyurethane acrylates may be dissolved in acrylic monomers or acrylic diluents like polyolpolyacrylate.

In addition to the aforementioned components, the energy curing intaglio ink in accordance with the present invention may contain further ingredients in order to optimize the properties of the energy curing intaglio ink to the specific needs. These further ingredients may be one or more stabilizing agents, one or more dispersing agents, one or more pigments, one or more fillers, one or more waxes, one or more photoinitiators, one or more rheology modifiers and the like.

More specifically, the energy curing intaglio ink in accordance with the present invention preferably further contains 1 to 5% by weight, more preferably 1 to 4% by weight and most preferably 1 to 3% by weight, such as about 2% by weight, of at least one stabilizing agent. Good results are for instance achieved, if the at least one stabilizing agent is selected from the group consisting of 4-methoxy phenol, tert-butyl hydroquinone, mono-tert-butyl hydroquinone, butylhydroxy toluene and arbitrary combinations of two or more of the aforementioned substances. Further suitable examples therefore are sterically hindered amines, like the commercial product Genorad 16 commercially available from Rahn AG.

Furthermore, it is preferred that the energy curing intaglio ink in accordance with the present invention further contains 0.1 to 5% by weight, more preferably 0.1 to 3% by weight and most preferably 0.1 to 2.5% by weight of at least one dispersing agent. The function of the dispersing agent is to properly disperse the pigment in the formulation, wherein their chemistry and nature is determined by the respective pigment type (i.e. colour index) and surface treatment of the pigment. Suitable dispersing agents are e.g. Solsperse types from Lubrizol or Disperbyk types from Byk Altana.

In accordance with a further preferred embodiment of the present invention, the energy curing intaglio ink in accordance with the present invention further contains 0.1 to 20% by weight, preferably 0.1 to 15% by weight and more preferably 0.1 to 10% by weight of at least one pigment. Examples for suitable pigments are Mapico yellow 215 9,5, Irgalite Green GL 1,5, Carbon Black Raven 0,45, Irgalite Blue LGLD, Irgalite 8B, OVP Green/Blue, OVP® Optically variable pigment from Flex. Corp., Santa Rosa, Green PG 7, Red PR 185, Red PR 122, Yellow PY095, Orange PO 34. 43 and the like.

In order to save pigment and to adjust the viscosity of the ink, it is preferred that the energy curing intaglio ink in accordance with the present invention further contains up to 50% by weight, preferably 0.1 to 40% by weight and more preferably 1 to 35% by weight of at least one filler. Good results are in particular achieved, when the filler is selected from the group consisting of chalk, barium sulfate, silica, kaolin, aluminum silicate, magnesium sulfate and arbitrary combinations of two or more of the aforementioned substances.

In accordance with a further preferred embodiment of the present invention, the energy curing intaglio ink in accordance with the present invention further contains up to 5% by weight, preferably 0.1 to 4% by weight and more preferably 0.1 to 3% by weight of at least one wax. Suitable examples for waxes are those selected from the group consisting of polyethylene wax, polytetrafluoroethylene wax, polyamide wax and arbitrary combinations of two or more of the aforementioned substances. The function of the wax is to impart abrasion resistance to the intaglio ink.

In order to allow an energy curing of the intaglio ink, it is preferred that the energy curing intaglio ink in accordance with the present invention further contains 2 to 12% by weight, more preferably 2 to 10% by weight and most preferably 2 to 8% by weight of at least one photoinitiator. Good results are in particular obtained with photoinitiators, which are selected from the group consisting of thioxanthones, alpha-hydroxyketones, phosphinoxides, acetophenones, benzophenones, alpha aminoketones and arbitrary combinations of two or more of the aforementioned substances.

In order to contribute to the adjustment of the rheology of the ink, it is further preferred that the energy curing intaglio ink in accordance with the present invention further contains 5 to 30% by weight, preferably 5 to 25% by weight and more preferably 5 to 20% by weight of polyether glycol-200-diacrylate, polyether glycol-400-diacrylate, polyether glycol-600-diacrylate, polyether glycol-800-diacrylate, polyetherglycol-1000-diacrylate, polyolpolyacrylate, PEG300-diacrylate, triethylenglycol diacrylate, triethylenglycol dimethacrylate, TPGDA tripropyleneglycol diacrylate, DPGDA dipropyleneglycol diacrylate, PPG700DA polypropyleneglycol (700) diacrylate, (12)PO(6)EODMA ethoxylated (6), propoxylated (12) dimethycrylate, TMP3EOTA ethoxylated (3) trimethylolpropane triacrylate, TMP6EOTA ethoxylated (6) trimethylolpropane triacrylate, TMP15EOTA ethoxylated (15) trimethylolpropane triacrylate, TMP20EOTA ethoxylated (20) trimethylolpropane triacrylate, PPTTA ethoxylated (5) pentaerythritol tetraacrylate, NPG2PODA propoxylated (2) neopentylglycol diacrylate, BPA3EODA ethoxylated (3) bisphenol-A-diacrylate, BPA10EODMA ethoxylated (10) bisphenol-A-dimethacrylate, and/or Laromer® BDDA butanediol diacrylate.

In accordance with a particular preferred embodiment of the present invention, the energy curing intaglio ink in accordance with the present invention comprises:
- 1 to 30% by weight of the at least one modified rosin,
- 1 to 20% by weight of the at least one tri-functional or higher-functional aliphatic urethane acrylate oligomer,
- 5 to 30% by weight of the at least one polyester acrylate,
- 1 to 5% by weight of at least one stabilizing agent, which is preferably selected from the group consisting of 4-methoxy phenol, tert-butyl hydroquinone, mono-tert-butyl hydroquinone, butylhydroxy toluene and arbitrary combinations of two or more of the aforementioned substances,
- 0.1 to 5% by weight of at least one dispersing agent,
- 0.1 to 20% by weight of at least one pigment,
- 0 to 50% by weight of at least one filler, which is preferably selected from the group consisting of chalk, barium sulfate, silica, kaolin, aluminum silicate, magnesium sulfate and arbitrary combinations of two or more of the aforementioned substances,
- 0 to 5% by weight of at least one wax, which is preferably selected from the group consisting of polyethylene wax, polytetrafluoroethylene wax, polyamide wax and arbitrary combinations of two or more of the aforementioned substances,
- 2 to 12% by weight of at least one photoinitiator, which is preferably selected from the group consisting of thioxanthones, alpha-hydroxyketones, phosphinoxides, acetophenones, benzophenones, alpha aminoketones and arbitrary combinations of two or more of the aforementioned substances, and
- 5 to 30% by weight of polyether glycol-200-diacrylate, polyether glycol-400-diacrylate, polyether glycol-600-diacrylate, polyether glycol-800-diacrylate, polyetherglycol-1000-diacrylate, polyolpolyacrylate, PEG300-diacrylate, triethylenglycol diacrylate, triethylenglycol dimethacrylate, TPGDA tripropyleneglycol diacrylate, DPGDA dipropyleneglycol diacrylate, PPG700DA polypropyleneglycol (700) diacrylate, (12)PO(6)EODMA ethoxylated (6), propoxylated (12) dimethycrylate, TMP3EOTA ethoxylated (3) trimethylolpropane triacrylate, TMP6EOTA ethoxylated (6) trimethylolpropane triacrylate, TMP15EOTA ethoxylated (15) trimethylolpropane triacrylate, TMP20EOTA ethoxylated (20) trimethylolpropane triacrylate, PPTTA ethoxylated (5) pentaerythritol tetraacrylate, NPG2PODA propoxylated (2) neopentylglycol diacrylate, BPA3EODA ethoxylatwed (3) bisphenol-A-diacrylate, BPA10EODMA ethoxylated (10) bisphenol-A-dimethacrylate, and/or Laromer® BDDA butanediol diacrylate.

Subsequently, the present invention is described by means of an illustrating, but not limiting example.

### Example and Comparative Example

### Ink Composition of the Example

The intaglio ink of the example was prepared with the following components:

| **No.** | **Compound** | **Parts by weight** |
|---|---|---|
| 1 | Aliphatic urethane acrylate oligomer diluted in polyolpolyacrylate, EB-2002 (Cytec) | 11,06 |
| 2 | Modified rosin with acid functionality (recipe see below) | 16,59 |
| 3 | Polyester acrylate Ebecryl 870 | 16,59 |
| 4 | Stabilizing agent Genorad 19 | 0,11 |
| 5 | Stabilizing agent BHT | 0,22 |
| 6 | EO-TMPTA | 1,88 |
| 7 | Dispersing agent Solsperse 39000 | 2,21 |
| 8 | Pigment Novoperm Carmine HF4C | 8,85 |
| 9 | Filler OMYA BSH | 33,19 |
| 10 | Polytetrafluorethylene wax (Herolub 5F) | 0,55 |
| 11 | Polyethylene wax (Ceridust 3620) | 1,66 |
| 12 | Photoinitiator ITX | 2,88 |
| 13 | Photoinitiator Irgacure 369 | 4,2 |
| | **Total** | **100** |

The modified rosin, i.e. the component 2, was composed as follows:

| **No.** | **Compound** | **Parts by weight** |
|---|---|---|
| 1 | Modified rosin with acid functionality | 60 |
| 2 | Stabilizer 4-methoxy phenol | 0.1 |
| 3 | Polyethylene-400-diacrylate | 40 |
| | **Total** | **100.1** |

The recipe of the component 1, i.e. the modified rosin, was as follows:

| **NO.** | **RM Code** | **Parts by weight** |
|---|---|---|
| **1** | Rosin | 42,55 |
| **2** | Maleic acid anhydride | 30,52 |
| **3** | Propylene glycol | 23,73 |
| **4** | 4-Methoxy phenol | 0,09 |
| **5** | Xylene | 3,11 |
| | **Total** | **100** |

The modified rosin had an acid value of 91.5, a melting point of 71°C, a weight average molecular weight of 4,500 and a number average molecular weight of 900.

### Ink Composition of the Comparative Example

The intaglio ink of the comparative example was prepared with the following components:

| **No** | **Compound** | **Parts by weight** |
|---|---|---|
| 1 | Aliphatic urethane acrylate oligomer diluted in polyolpolyacrylate, Ebecryl EB-2002 | 10,75 |
| 2 | Modified rosin with acid functionality, recipe as for the inventive example | 35,05 |
| 3 | Polyester acrylate Ebecryl 870 | 0 |
| 4 | Stabilizing agent 5% Genorad 19 | 0,011 |
| 5 | Stabilizing agent BHT | 0,22 |
| 6 | EO-TMPTA) | 1,83 |
| 7 | Dispersing agent, Solsperse 39000 | 2,15 |
| 8 | Pigment, Novoperm Carmine HF4C | 8,60 |
| 9 | Filler, OMYA BSH | 32,26 |
| 10 | Polytetrafluorethylene wax | 0.54 |
| 11 | Polyethylene wax | 1,61 |
| 12 | Photoinitiator ITX | 2,80 |
| 13 | Photoinitiator, Irgacure 369 | 4,09 |
| | **Total** | **100** |

Thus, the intaglio ink composition of the comparative example differed from that of the example in that the intaglio ink of the example included 15 parts by weight of modified rosin and 15 parts by weight of polyester acrylate, whereas the intaglio ink of the comparative example included 32.6 parts by weight of modified rosin and no polyester acrylate.

### Chemical fastness test

The chemical fastness of the intaglio ink of the example and of the intaglio ink of the comparative example were tested by the following procedure.

Dry printed samples were dipped in the respective solvent for a time and at a temperature as mentioned in the subsequent table. For some chemicals the printed samples were rinsed with water after having been removed from the chemical (noted as treatment "W" in the subsequent table). The printed samples were put between filter papers and allowed to dry. After drying, the treated printed samples were compared with untreated ones and the differences were documented according to the following scale:
- 4: No difference
- 3: Slight difference (colour shade, colour strength, reduction of intaglio relief)
- 2: Remarkable difference (less than 50% destroyed)
- 1: Strong difference (more than 50% destroyed)
- 0: Ink has completely disappeared

The obtained results are summarized in the below table.

| **Agent** | **Concentration** | **Test Conditions** | | | **Requirements (Scale Value)** | **Ink of Example** | **Ink of Comparative Example** |
|---|---|---|---|---|---|---|---|
| | | **°C** | **min** | **Treatment** | **Intaglio** | | |
| Ethyl alcohol (C₂H₅OH) | 96% | 25 | 30 | | 4 | 4 | 4 |
| Acetone (CH₃COCH₃) | pure | 25 | 30 | | 4 | 4 | 4 |
| Xylene (C₆H₄(CH₃)₂) | pure | 25 | 30 | | 4 | 4 | 4 |
| Acetic acid (CH₃COOH) | 20% | 25 | 30 | W | 4 | 4 | 3 |
| Hydrochlorid acid (HCL) | 5% | 25 | 30 | W | 3 | 4 | 3 |
| Sulfuric acid (H₂SO₄) | 5% | 25 | 30 | W | 3 | 4 | 3 |
| Sodium hypochlorite (NaClO) | 5% | 25 | 30 | W | 3 | 4 | 4 |
| Sodium hydroxide (NaOH) | 5% | 25 | 30 | W | 2 | 3 | 3 |
| Water, hot | pure | 60 | 30 | | 4 | 4 | 4 |
| Water, hot | pure | boil | 30 | | 4 | 4 | 4 |
| Washing powder, industrial | 0.5% persil, 1% Na₂CO₃ | 95 | 30 | W | 2 | 3-4 | 1 |
| Hydrogen peroxide (H₂O₂) | 5% | 25 | 30 | W | 4 | 4 | 4 |
| Diethylene glycol (O(C₂H₄OH)₂) | pure | 25 | 30 | | 4 | 4 | 4 |
| Tetrachlorethylene (C₂Cl₄) | pure | 25 | 30 | | 4 | 4 | 4 |
| Synthetic perspiration⁴⁾ | pure | 25 | 30 | W | 4 | 4 | 4 |

| | | | | | | | |
|---|---|---|---|---|---|---|---|
| W rinsed with water after removal from the chemical | | | | | | | |

As shown in the above table, the intaglio ink of the example (which included polyester acrylate) had a significantly better chemical resistance against acetic acid and a drastically better chemical resistance against industrial washing powder than the intaglio ink of the comparative example (which did not include polyester acrylate).

### Wiping properties test

The wiping properties of the intaglio ink of the example and of the intaglio ink of the comparative example were tested by the following procedure.

A small amount of intaglio ink was applied to the inner wall of a test tube. Thereafter, the test tube was carefully filled with wiping solution and placed in a test tube rack. The wiping solution had the following composition: 0.8% by weight NaOH, 0.7% by weight sulfated Castor Oil with a sulfatization degree of 75% (commercisal product Tuerkisch Rotoel/sulfatiertes Rizinusöl(Natriumsalz) SC075% of supplier Mercur Handel) and balance distilled water.

The entire ink was covered by the wiping solution and an agitation of the liquid was avoided. The interval between filling the test tube with wiping solution and the moment when the ink started to dissolve was recorded considering the aspects bleeding, formation of streaks and tinting of the solution. If the ink did not start to dissolve after 5 minutes, the test tube was shaken twice. If this had been to no avail, the surface of the ink was scratched with a spatula.

The wiping properties were assessed as follows:
- 1: The intaglio ink started to dissolve within 1 minute
- 2: The intaglio ink started to dissolve within 3 minutes
- 3: The intaglio ink started to dissolve within 5 minutes
- 4: The wiping solution became coloured on shaking the test tube
- 5: The wiping solution became coloured on scratching the test tube with a spatula
- 6: No reaction

The obtained results are summarized in the below table.

| **Result** | **Ink of Example** | **Ink of Comparative Example** |
|---|---|---|
| Wiping Soln-1 (0,7% Sodium hydroxide, 0,33% sulfated castor oil.) | 1 | 1 |

Thus, both, the intaglio ink of the example and the intaglio ink of the comparative example, had excellent wiping properties

## Claims

1. An energy curing intaglio ink comprising a binder and at least one photoinitiator to initiate the polymerization of the binder upon irradiation by electromagnetic radiation or electron beam radiation, wherein the binder comprises:
a) at least one modified rosin having an acid number of at least 50 mg KOH/g, wherein the modified rosin is obtainable by reacting a mixture including rosin with at least one monounsaturated dicarboxylic acid and/or dicarboxylic acid anhydride and/or dicarboxylic half-ester selected from the group consisting of maleic acid, maleic acid anhydride, fumaric acid, fumaric acid anhydride, half-esters of the aforementioned acids and arbitrary combinations of two or more of the aforementioned substances and optionally a polyhydric alcohol,
b) at least one tri-functional or higher-functional aliphatic urethane acrylate oligomer having a weight average molecular weight of 800 to 5,000 g/mol and
c) at least one polyester acrylate, which has a solubility of at most 60 g/l in a wiping solution consisting of 0.8% by weight of sodium hydroxide, 0.7% by weight of sulfated castor oil with a sulfatization degree of 75% and remainder to 100% by weight of distilled water,
wherein the acid number of the at least one modified rosin, the weight average molecular weight of the at least one tri-functional or higher-functional aliphatic urethane acrylate oligomer and the solubility of the at least one polyester acrylate are determined by the methods described in the description.

2. The energy curing intaglio ink in accordance with claim 1, wherein the at least one polyester acrylate has a solubility in the wiping solution of at most 60 g/l, preferably of at most 10 g/l, more preferably of at most 5 g/l, even more preferably of at most 1 g/l, yet more preferably of at most 0.2 g/l, still more preferably of at most 0.05 g/l and most preferably of at most 0.001 g/l.

3. The energy curing intaglio ink in accordance with claim 1 or 2, wherein the content of the at least one polyester acrylate, calculated on solid content if a diluted polyester acrylate is used, is 5 to 30% by weight, preferably 5 to 25% by weight, more preferably 5 to 20% by weight and most preferably 10 to 17.5% by weight based on 100% by weight of the energy curing intaglio ink.

4. The energy curing intaglio ink in accordance with any of the preceding claims, wherein the at least one polyester acrylate has a hydroxyl number of 10 to 150 mg KOH/g, water, wherein the hydroxyl number is determined by the method described in the description.

5. The energy curing intaglio ink in accordance with any of the preceding claims, wherein the at least one modified rosin has an acid number of at least 60 mg KOH/g, preferably of at least 70 mg KOH/g, more preferably of at least 80 mg KOH/g and most preferably of at least 85 mg KOH/g.

6. The energy curing intaglio ink in accordance with any of the preceding claims, wherein the at least one modified rosin has an acid number of at most 300 mg KOH/g, preferably of at most 200 mg KOH/g, more preferably of at most 150 mg KOH/g and most preferably of at most 100 mg KOH/g.

7. The energy curing intaglio ink in accordance with any of the preceding claims, wherein the content of the at least one modified rosin is 5 to 30% by weight, preferably 5 to 25% by weight and most preferably 5 to 20% by weight based on 100% by weight of the energy curing intaglio ink.

8. The energy curing intaglio ink in accordance with any of the preceding claims, wherein the at least one modified rosin is obtainable by reacting a mixture including i) rosin with ii) at least one monounsaturated dicarboxylic acid and/or dicarboxylic acid anhydride selected from the group consisting of maleic acid, maleic acid anhydride, fumaric acid, fumaric acid anhydride, half-esters of the aforementioned acids and arbitrary combinations of two or more of the aforementioned substances, iii) at least one di-functional or higher-functional alcohol, wherein the at least one di-functional or higher-functional alcohol is preferably selected from the group consisting of ethylene glycol, propylene glycol, butylene glycol, pentylene glycol, hexylene glycol, glycerol, trimethylolpropane, di-trimethylolpropane, pentaerythriol, dipentaerythriol and arbitrary combinations of two or more of the aforementioned substances and iv) optionally at least one phenol compound.

9. The energy curing intaglio ink in accordance with claim 8, wherein the at least one modified rosin is obtainable by reacting a mixture including:
30-60% by weight, preferably 35-55% by weight and more preferably 40-50% by weight of component i),
20-50% by weight, preferably 25 to 45% by weight and more preferably 25 to 40% by weight of component ii),
10-50% by weight, preferably 15-40% by weight and more preferably 20 to 30% by weight of component iii) and optionally
1-30% by weight, preferably 5-25% by weight and more preferably 5-20% by weight of component iv).

10. The energy curing intaglio ink in accordance with any of the preceding claims, wherein the at least one modified rosin has a weight average molecular weight of 100 to 10,000 g/mol, preferably of 400 to 5,000 g/mol, more preferably of 600 to 2,000 g/mol and most preferably of 700 to 1,000 g/mol.

11. The energy curing intaglio ink in accordance with any of the preceding claims, wherein the at least one tri-functional or higher-functional aliphatic urethane acrylate oligomer has a weight average molecular weight of 1,000 to 4,000 g/mol, preferably of 2,000 to 3,000 g/mol and more preferably of 2,250 to 2,750 g/mol.

12. The energy curing intaglio ink in accordance with any of the preceding claims, wherein the energy curing intaglio ink further contains up to 50% by weight, preferably 0.1 to 40% by weight and more preferably 1 to 35% by weight of at least one filler, which is preferably selected from the group consisting of chalk, barium sulfate, silica, kaolin, aluminum silicate, magnesium sulfate and arbitrary combinations of two or more of the aforementioned substances.

13. The energy curing intaglio ink in accordance with any of the preceding claims, wherein the energy curing intaglio ink further contains 2 to 12% by weight, preferably 2 to 10% by weight and more preferably 2 to 8% by weight of at least one photoinitiator, which is preferably selected from the group consisting of thioxanthones, alpha-hydroxyketones, phosphinoxides, acetophenones, benzophenones, alpha aminoketones and arbitrary combinations of two or more of the aforementioned substances.

14. The energy curing intaglio ink in accordance with any of the preceding claims, wherein the energy curing intaglio ink further contains 5 to 30% by weight, preferably 5 to 25% by weight and more preferably 5 to 20% by weight of polyether glycol-200-diacrylate, polyether glycol-400-diacrylate, polyether glycol-600-diacrylate, polyether glycol-800-diacrylate, polyetherglycol-1000-diacrylate, PEG300-diacrylate, triethylenglycol diacrylate, triethylenglycol dimethacrylate, TPGDA tripropyleneglycol diacrylate, DPGDA dipropyleneglycol diacrylate, PPG700DA polypropyleneglycol (700) diacrylate, (12)PO(6)EODMA ethoxylated (6), propoxylated (12) dimethycrylate, TMP3EOTA ethoxylated (3) trimethylolpropane triacrylate, TMP6EOTA ethoxylated (6) trimethylolpropane triacrylate, TMP15EOTA ethoxylated (15) trimethylolpropane triacrylate, TMP20EOTA ethoxylated (20) trimethylolpropane triacrylate, PPTTA ethoxylated (5) pentaerythritol tetraacrylate, NPG2PODA propoxylated (2) neopentylglycol diacrylate, BPA3EODA ethoxylatwed (3) bisphenol-A-diacrylate, BPA10EODMA ethoxylated (10) bisphenol-A-dimethacrylate, and/or BDDA butanediol diacrylate, hexanediol diacrylate (HDDA), glycerylpropoxy triacrylate (GPTA), and PTMEG-diacrylate.

15. The energy curing intaglio ink in accordance with any of the preceding claims, which comprises:
- 1 to 30% by weight of the at least one modified rosin,
- 1 to 20% by weight of the at least one tri-functional or higher-functional aliphatic urethane acrylate oligomer,
- 5 to 30% by weight of the at least one polyester acrylate,
- 1 to 5% by weight of at least one stabilizing agent, which is preferably selected from the group consisting of 4-methoxy phenol, tert-butyl hydroquinone, mono-tert-butyl hydroquinone, butylhydroxy toluene and arbitrary combinations of two or more of the aforementioned substances,
- 0.1 to 5% by weight of at least one dispersing agent,
- 0.1 to 20% by weight of at least one pigment,
- 0 to 50% by weight of at least one filler, which is preferably selected from the group consisting of chalk, barium sulfate, silica, kaolin, aluminum silicate, magnesium sulfate and arbitrary combinations of two or more of the aforementioned substances,
- 0 to 5% by weight of at least one wax, which is preferably selected from the group consisting of polyethylene wax, polytetrafluoroethylene wax, polyamide wax and arbitrary combinations of two or more of the aforementioned substances,
- 2 to 12% by weight of at least one photoinitiator, which is preferably selected from the group consisting of thioxanthones, alpha-hydroxyketones, phosphinoxides, acetophenones, benzophenones, alpha aminoketones and arbitrary combinations of two or more of the aforementioned substances, and
- 5 to 30% by weight of polyether glycol-200-diacrylate, polyether glycol-400-diacrylate, polyether glycol-600-diacrylate, polyether glycol-800-diacrylate, polyetherglycol-1000-diacrylate, PEG300-diacrylate, triethylenglycol diacrylate, triethylenglycol dimethacrylate, TPGDA tripropyleneglycol diacrylate, DPGDA dipropyleneglycol diacrylate, PPG700DA polypropyleneglycol (700) diacrylate, (12)PO(6)EODMA ethoxylated (6), propoxylated (12) dimethycrylate, TMP3EOTA ethoxylated (3) trimethylolpropane triacrylate, TMP6EOTA ethoxylated (6) trimethylolpropane triacrylate, TMP15EOTA ethoxylated (15) trimethylolpropane triacrylate, TMP20EOTA ethoxylated (20) trimethylolpropane triacrylate, PPTTA ethoxylated (5) pentaerythritol tetraacrylate, NPG2PODA propoxylated (2) neopentylglycol diacrylate, BPA3EODA ethoxylated (3) bisphenol-A-diacrylate, BPA10EODMA ethoxylated (10) bisphenol-A-dimethacrylate, and/or BDDA butanediol diacrylate, hexanediol diacrylate (HDDA), glycerylpropoxy triacrylate (GPTA), and PTMEG-diacrylate.

## Patentansprüche

1. Energiehärtende Tiefdrucktinte, umfassend ein Bindemittel und mindestens einen Photoinitiator, um die Polymerisation des Bindemittels nach der Bestrahlung durch elektromagnetische Strahlung oder Elektronenstrahlstrahlung auszulösen, wobei das Bindemittel umfasst:
a) mindestens ein modifiziertes Kolophonium, das eine Säurezahl von mindestens 50 mg KOH/g aufweist, wobei das modifizierte Kolophonium erhältlich ist durch Reaktion einer Mischung, die Kolophonium enthält, mit mindestens einer einfach ungesättigten Dicarbonsäure und/oder Dicarbonsäure-Anhydrid und/oder Dicarbonsäure-Halbester, das aus der Gruppe ausgewählt wird bestehend aus Maleinsäure, Maleinsäureanhydrid, Fumarsäure, Fumarsäureanhydrid, Halb-Estern der vorgenannten Säuren und beliebigen Kombinationen von zwei oder mehreren der vorgenannten Substanzen und optional einem mehrwertigen Alkohol,
b) mindestens ein trifunktionelles oder höherfunktionelles aliphatisches Urethanacrylat-Oligomer, das ein gewichtsmittleres Molekulargewicht von 800 bis 5.000 g/mol aufweist, und
c) mindestens ein Polyesteracrylat, das eine Löslichkeit von höchstens 60 g/l in einer Reinigungslösung aufweist, die aus 0,8 Gew.-% Natriumhydroxid, 0,7 Gew.-% sulphatiertem Rizinusöl mit einem Sulfurierungsgrad von 75 % und einem Rest zu 100 Gew.-% destilliertem Wasser besteht,
wobei die Säurezahl des mindestens einen modifizierten Kolophoniums, das gewichtsmittlere Molekulargewicht des mindestens einen trifunktionellen oder höherfunktionellen aliphatischen Urethanacrylat-Oligomers und die Löslichkeit des mindestens einen Polyester-Acrylats durch die in der Beschreibung beschriebenen Verfahren ermittelt werden.

2. Energiehärtende Tiefdrucktinte nach Anspruch 1, wobei das mindestens eine Polyester-Acrylat hat eine Löslichkeit in der Reinigungsflüssigkeit von höchstens 60 g/l, vorzugsweise höchstens 10 g/l, noch mehr bevorzugt höchstens 5 g/l, noch stärker bevorzugt höchstens 1 g/l, besonders bevorzugt höchstens 0,2 g/l, besonders noch mehr bevorzugt höchstens 0,05 g/l und am meisten bevorzugt höchstens 0,001 g/l aufweist.

3. Energiehärtende Tiefdrucktinte nach Anspruch 1 oder 2, wobei der Gehalt des mindestens einen Polyester-Acrylats, berechnet auf den Feststoffgehalt, falls ein gelöstes Polyester-Acrylat verwendet wird, 5 bis 30 Gew.-%, vorzugsweise 5 bis 25 Gew.-%, mit mehr bevorzugt 5 bis 20 Gew.-% und am meisten bevorzugt 10 bis 17,5 Gew.-% beträgt, basierend auf 100 Gew.-% der energiehärtenden Tiefdrucktinte.

4. Energiehärtende Tiefdrucktinte nach einem der vorhergehenden Ansprüche, wobei das mindestens eine Polyester-Acrylat eine Hydroxylzahl von 10 bis 150 mg KOH/g Wasser aufweist, wobei die Hydroxylzahl durch das in der Beschreibung beschriebene Verfahren ermittelt wird.

5. Energiehärtende Tiefdrucktinte nach einem der vorhergehenden Ansprüche, wobei das mindestens eine modifizierte Kolophonium eine Säurezahl von mindestens 60 mg KOH/g, vorzugsweise von mindestens 70 mg KOH/g, mehr bevorzugt von mindestens 80 mg KOH/g und am meisten bevorzugt von mindestens 85 mg KOH/g aufweist.

6. Energiehärtende Tiefdrucktinte nach einem der vorhergehenden Ansprüche, wobei das mindestens eine modifizierte Kolophonium eine Säurezahl von höchstens 300 mg KOH/g, vorzugsweise von höchstens 200 mg KOH/g, mehr bevorzugt von höchstens 150 mg KOH/g und am meisten bevorzugt von höchstens 100 mg KOH/g aufweist.

7. Energiehärtende Tiefdrucktinte nach einem der vorhergehenden Ansprüche, wobei der Gehalt des mindestens einen Polyester-Acrylats 5 bis 30 Gew.-%, vorzugsweise 5 bis 25 Gew.-% und am meisten bevorzugt 5 bis 20 Gew.-% beträgt, basierend auf 100 Gew.-% der energiehärtenden Tiefdrucktinte.

8. Energiehärtende Tiefdrucktinte nach einem der vorhergehenden Ansprüche, wobei das mindestens eine modifizierte Kolophonium erhältlich ist durch Reaktion einer Mischung, die i) Kolophonium enthält, mit ii) mindestens einer einfach ungesättigten Dicarbonsäure und/oder Dicarbonsäure-Anhydrid, das aus der Gruppe ausgewählt wird bestehend aus Maleinsäure, Maleinsäureanhydrid, Fumarsäure, Fumarsäureanhydrid, Halb-Estern der vorgenannten Säuren und beliebigen Kombinationen von zwei oder mehreren der vorgenannten Substanzen, iii) mindestens einem difunktionellen oder höherfunktionellen Alkohol, wobei der mindestens eine difunktionelle oder höherfunktionelle Alkohol vorzugsweise ausgewählt wird aus der Gruppe bestehend aus Ethylenglycol, Propylenglycol, Butylenglycol, Pentylenglycol, Hexylenglycol, Glycerol, Trimethylolpropan, Ditrimethylolpropan, Pentaerythriol, Dipentaerythriol und beliebigen Kombinationen von zwei oder mehreren der vorgenannten Substanzen und iv) optional mindestens einer Phenol-Verbindung.

9. Energiehärtende Tiefdrucktinte nach Anspruch 8, wobei das mindestens eine modifizierte Kolophonium erhältlich ist durch Reaktion einer Mischung, beinhaltend: 30-60 Gew.-%, vorzugsweise 35-55 Gew.-% und noch mehr bevorzugt 40-50 Gew.-% der Komponente i),
20-50 Gew.-%, vorzugsweise 25 bis 45 Gew.-% und noch mehr bevorzugt 25 bis 40 Gew.-% der Komponente ii),
10-50 Gew.-%, vorzugsweise 15-40 Gew.-% und noch mehr bevorzugt 20 bis 30 Gew.-% der Komponente iii) und optional
1-30 Gew.-%, vorzugsweise 5-25 Gew.-% und noch mehr bevorzugt 5-20 Gew.-% der Komponente iv).

10. Energiehärtende Tiefdrucktinte nach einem der vorhergehenden Ansprüche, wobei das mindestens eine modifizierte Kolophonium ein gewichtsmittleres Molekulargewicht von 100 bis 10.000 g/mol, vorzugsweise von 400 bis 5.000 g/mol, mehr bevorzugt von 600 bis 2.000 g/mol und am meisten bevorzugt von 700 bis 1.000 g/mol aufweist.

11. Energiehärtende Tiefdrucktinte nach einem der vorhergehenden Ansprüche, wobei das mindestens eine trifunktionelle oder höherfunktionelle aliphatische Urethanacrylat-Oligomer ein gewichtsmittleres Molekulargewicht von 1.000 bis 4.000 g/mol, vorzugsweise von 2.000 bis 3.000 g/mol und mehr bevorzugt von 2.250 bis 2.750 g/mol aufweist.

12. Energiehärtende Tiefdrucktinte nach einem der vorhergehenden Ansprüche, wobei die energiehärtende Tiefdrucktinte ferner bis zu 50 Gew.-%, vorzugsweise 0,1 bis 40 Gew.-% und noch bevorzugter 1 bis 35 Gew.-% mindestens eines Füllstoffs enthält, der vorzugsweise ausgewählt wird aus der Gruppe bestehend aus Kreide, Bariumsulfat, Siliziumdioxid, Kaolin, Aluminiumsilicat, Magnesiumsulfat und beliebigen Kombinationen von zwei oder mehreren der vorgenannten Substanzen.

13. Energiehärtende Tiefdrucktinte nach einem der vorhergehenden Ansprüche, wobei die energiehärtende Tiefdrucktinte ferner 2 bis 12 Gew.-%, vorzugsweise 2 bis 10 Gew.-% und noch bevorzugter 2 bis 8 Gew.-% mindestens eines Photoinitiators enthält, der vorzugsweise ausgewählt wird aus der Gruppe bestehend aus Thioxanthonen, Alphahydroxyketonen, Phosphinoxiden, Acetophenonen, Benzophenonen, Alpha-Aminoketonen und beliebigen Kombinationen von zwei oder mehreren der vorgenannten Substanzen.

14. Energiehärtende Tiefdrucktinte nach einem der vorhergehenden Ansprüche, wobei die energiehärtende Tiefdrucktinte ferner 5 bis 30 Gew.-%, vorzugsweise 5 bis 25 Gew.-% und noch bevorzugter 5 bis 20 Gew.-% Polyetherglycol-200-diacrylat, Polyetherglycol-400-diacrylat, Polyetherglycol-600-diacrylat, Polyetherglycol-800-diacrylat, Polyetherglycol-1000-diacrylat, PEG300-Diacrylat, Tri-ethylenglycoldiacrylat, Tri-ethylenglycoldimethacrylat, TPGDA-Tripropylenglycoldiacrylat, DPGDA-Dipropylenglycoldiacrylat, PPG700DA-Polypropylenglycol (700) diacrylat, (12)PO(6)EODMA-ethoxyliertes (6), propoxyliertes (12) Dimethycrylat, TMP3EOTA-ethoxyliertes (3) Trimethylolpropantriacrylat, TMP6EOTA-ethoxyliertes (6) Trimethylolpropantriacrylat, TMP15EOTA-ethoxyliertes (15) Trimethylolpropantriacrylat, TMP20EOTA-ethoxyliertes (20) Trimethylolpropantriacrylat, PPTTA-ethoxyliertes (5) Pentaerythritoltetraacrylat, NPG2PODA-propoxyliertes (2) Neopentylglycoldiacrylat, BPA3EODA-ethoxyliertes (3) Bisphenol-A-diacrylat, BPA10EODMA-ethoxyliertes (10) Bisphenol-A-dimethacrylat und/oder BDDA-Butandioldiacrylat, Hexanedioldiacrylat (HDDA), Glycerylpropoxytriacrylat (GPTA) und PTMEG-Diacrylat enthält.

15. Energiehärtende Tiefdrucktinte nach einem der vorhergehenden Ansprüche, die umfasst:
- 1 bis 30 Gew.-% des mindestens einen modifizierten Kolophoniums,
- 1 bis 20 Gew.-% des mindestens einen trifunktionellen oder höherfunktionellen aliphatischen Urethanacrylat-Oligomers,
- 5 bis 30 Gew.-% des mindestens einen Polyesteracrylats,
- 1 bis 5 Gew.-% von mindestens einem Stabilisierungsmittel, das vorzugsweise ausgewählt wird aus der Gruppe bestehend aus 4-Methoxyphenol, Tertbutylhydrochinon, Mono-tert-butyl- hydrochinon, Butylhydroxytoluol und beliebigen Kombinationen von zwei oder mehreren der vorgenannten Substanzen,
- 0,1 bis 5 Gew.-% von mindestens einem Dispergiermittel,
- 0,1 bis 20 Gew.-% von mindestens einem Pigment,
- 0 bis 50 Gew.-% von mindestens einem Füllmittel, das vorzugsweise ausgewählt wird aus der Gruppe bestehend aus Kreide, Bariumsulfat, Siliziumdioxid, Kaolin, Aluminiumsilicat, Magnesiumsulfat und beliebigen Kombinationen von zwei oder mehreren der vorgenannten Substanzen,
- 0 bis 5 Gew.-% von mindestens einem Wachs, das vorzugsweise ausgewählt wird aus der Gruppe bestehend aus Polyethylenwachs, Polytetrafluoroethylenwachs, Polyamidwachs und beliebigen Kombinationen von zwei oder mehreren der vorgenannten Substanzen,
- 2 bis 12 Gew.-% von mindestens einem Photoinitiator, der vorzugsweise ausgewählt wird aus der Gruppe bestehend aus Thioxanthonen, Alphahydroxyketonen, Phosphinoxiden, Acetophenonen, Benzophenonen, Alpha-Aminoketonen und beliebigen Kombinationen von zwei oder mehreren der vorgenannten Substanzen, und
- 5 bis 30 Gew.-% Polyetherglycol-200-diacrylat, Polyetherglycol-400-diacrylat, Polyetherglycol-600-diacrylat, Polyetherglycol-800-diacrylat, Polyetherglycol-1000-diacrylat, PEG300-Diacrylat, Tri-ethylenglycoldiacrylat, Tri-ethylenglycoldimethacrylat, TPGDA-Tripropylenglycoldiacrylat, DPGDA-Dipropylenglycoldiacrylat, PPG700DA-Polypropylenglycol (700)-diacrylat, (12)PO(6)EODMA-ethoxyliertes (6), propoxyliertes (12) Dimethycrylat, TMP3EOTA-ethoxyliertes (3) Trimethylolpropantriacrylat, TMP6EOTA-ethoxyliertes (6) Trimethylolpropantriacrylat, TMP15EOTA-ethoxyliertes (15) Trimethylolpropantriacrylat, TMP20EOTA-ethoxyliertes (20) Trimethylolpropantriacrylat, PPTTA-ethoxyliertes (5) Pentaerythritoltetraacrylat, NPG2PODA-propoxyliertes (2) Neopentylglycoldiacrylat, BPA3EODA-ethoxyliertes (3) Bisphenol-A-diacrylat, BPA10EODMA-ethoxyliertes (10) Bisphenol-A-dimethacrylat und/oder BDDA-Butandioldiacrylat, Hexanedioldiacrylat (HDDA), Glycerylpropoxytriacrylat (GPTA) und PTMEG-Diacrylat.

## Revendications

1. Encre en creux de durcissement par énergie comprenant un liant et au moins un photo-initiateur pour initier la polymérisation du liant lors de l'irradiation par un rayonnement électromagnétique ou un rayonnement par faisceau d'électrons, dans laquelle le liant comprend :
**a**) au moins une colophane modifiée ayant un indice d'acide d'au moins 50 mg de KOH/g, dans laquelle la colophane modifiée peut être obtenue en faisant réagir un mélange comprenant de la colophane avec au moins un acide dicarboxylique monoinsaturé et/ou un anhydride d'acide dicarboxylique et/ou un demi-ester dicarboxylique choisi dans le groupe constitué de l'acide maléique, de l'anhydride d'acide maléique, de l'acide fumarique, de l'anhydride d'acide fumarique, des demi-esters des acides susmentionnés et des combinaisons arbitraires de deux ou plusieurs des substances susmentionnées et éventuellement d'un alcool polyhydrique,
**b**) au moins un oligomère d'acrylate d'uréthane aliphatique trifonctionnel ou de fonctionnalité supérieure ayant un poids moléculaire moyen en poids de 800 à 5 000 g/mol et
c) au moins un acrylate de polyester, qui a une solubilité d'au plus 60 g/l dans une solution d'essuyage constituée de 0,8 % en poids d'hydroxyde de sodium, de 0,7 % en poids d'huile de ricin sulfatée avec un degré de sulfuration de 75 % et le complément à 100 % en poids d'eau distillée,
dans laquelle l'indice d'acide de l'au moins une colophane modifiée, le poids moléculaire moyen en poids de l'au moins un oligomère d'acrylate d'uréthane aliphatique trifonctionnel ou de fonctionnalité supérieure et la solubilité de l'au moins un acrylate de polyester sont déterminées par les procédés décrits dans la description,

2. Encre en creux de durcissement par énergie selon la revendication 1, dans laquelle l'au moins un acrylate de polyester a une solubilité dans la solution d'essuyage d'au plus 60 g/l, de préférence d'au plus 10 g/l, mieux encore d'au plus 5 g/l, encore mieux
d'au plus 1 g/l, encore mieux encore d'au plus 0,2 g/l, encore mieux encore d'au plus 0,05 g/l et tout particulièrement d'au plus 0,001 g/l.

3. Encre en creux de durcissement par énergie selon la revendication 1 ou 2, dans laquelle la teneur en l'au moins un acrylate de polyester, calculée par rapport à la teneur en matières solides si un polyester acrylate dilué est utilisé, est de 5 à 30 % en poids, de préférence de 5 à 25 % en poids, mieux encore de 5 à 20 % en poids et tout particulièrement de 10 à 17,5 % en poids, pour 100 % en poids de l'encre en creux de durcissement par énergie.

4. Encre en creux de durcissement par énergie selon l'une quelconque des revendications précédentes, dans laquelle l'au moins un acrylate de polyester a un indice d'hydroxyle de 10 à 150 mg de KOH/g, dans laquelle l'indice d'hydroxyle est déterminé par le procédé décrit dans la description.

5. Encre en creux de durcissement par énergie selon l'une quelconque des revendications précédentes dans laquelle l'au moins une colophane modifiée a un indice d'acide d'au moins 60 mg de KOH/g, de préférence d'au moins 70 mg de KOH/g, mieux encore d'au moins 80 mg de KOH/g et tout particulièrement d'au moins 85 mg de KOH/g.

6. Encre en creux de durcissement par énergie selon l'une quelconque des revendications précédentes dans laquelle l'au moins une colophane modifiée a un indice d'acide d'au plus 300 mg de KOH/g, de préférence d'au plus 200 mg de KOH/g, mieux encore d'au plus 150 mg de KOH/g et tout particulièrement d'au plus 100 mg de KOH/g.

7. Encre en creux de durcissement par énergie selon l'une quelconque des revendications précédentes dans laquelle la teneur en l'au moins une colophane modifiée est de 5 à 30 % en poids, de préférence de 5 à 25 % en poids et tout particulièrement de 5 à 20 % en poids, pour 100 % en poids de l'encre en creux de durcissement par énergie.

8. Encre en creux de durcissement par énergie selon l'une quelconque des revendications précédentes, dans laquelle l'au moins une colophane modifiée peut être obtenue en faisant réagir un mélange comprenant i) de la colophane avec ii) au moins un acide dicarboxylique monoinsaturé et/ou un anhydride d'acide dicarboxylique choisi dans le groupe constitué de l'acide maléique, de l'anhydride d'acide maléique, de l'acide fumarique, de l'anhydride d'acide fumarique, des demi-esters des acides susmentionnés et des combinaisons arbitraires de deux ou plusieurs des substances susmentionnées, iii) au moins un alcool di-fonctionnel ou à fonctionnalité supérieure, dans laquelle l'au moins un alcool di-fonctionnel ou à fonctionnalité supérieure est de préférence choisi dans le groupe constitué de l'éthylène glycol, du propylène glycol, du butylène glycol, du pentylène glycol, de l'hexylène glycol, du glycérol, du triméthylolpropane, du di-triméthylolpropane, du pentaérythriol, du dipentaérythriol et des combinaisons arbitraires de deux ou plusieurs des substances susmentionnées et iv) éventuellement au moins un composé phénolique.

9. Encre en creux de durcissement par énergie selon la revendication 8, dans laquelle l'au moins une colophane modifiée peut être obtenue en faisant réagir un mélange comprenant :
de 30 à 60 % en poids, de préférence de 35 à 55 % en poids et mieux encore de 40 à 50 % en poids du composant i),
de 20 à 50 % en poids, de préférence de 25 à 45 % en poids et mieux encore de 25 à 40 % en poids du composant ii),
de 10 à 50 % en poids, de préférence de 15 à 40 % en poids et mieux encore de 20 à 30 % en poids du composant iii) et éventuellement
de 1 à 30 % en poids, de préférence de 5 à 25 % en poids et mieux encore de 5 à 20 % en poids du composant iv).

10. Encre en creux de durcissement par énergie selon l'une quelconque des revendications précédentes, dans laquelle l'au moins une colophane modifiée a un poids moléculaire moyen en poids de 100 à 10 000 g/mol, de préférence de 400 à 5 000 g/mol, mieux encore de 600 à 2 000 g/mol et tout particulièrement de 700 à 1 000 g/mol.

11. Encre en creux de durcissement par énergie selon l'une quelconque des revendications précédentes, dans laquelle l'au moins un oligomère d'acrylate d'uréthane aliphatique trifonctionnel ou à fonctionnalité supérieure a un poids moléculaire moyen en poids de 1 000 à 4 000 g/mol, de préférence de 2 000 à 3 000 g/mol et mieux encore de 2 250 à 2 750 g/mol.

12. Encre en creux de durcissement par énergie selon l'une quelconque des revendications précédentes, dans laquelle l'encre en creux de durcissement par énergie contient en outre jusqu'à 50 % en poids, de préférence de 0,1 à 40 % en poids et mieux encore de 1 à 35 % en poids d'au moins une charge, qui est de préférence choisie dans le groupe constitué de la craie, du sulfate de baryum, de la silice, du kaolin, du silicate d'aluminium, du sulfate de magnésium et des combinaisons arbitraires de deux ou plusieurs des substances susmentionnées.

13. Encre en creux de durcissement par énergie selon l'une quelconque des revendications précédentes, dans laquelle l'encre en creux de durcissement par énergie contient en outre de 2 à 12 % en poids, de préférence de 2 à 10 % en poids et mieux encore de 2 à 8% en poids d'au moins un photo-initiateur, qui est de préférence choisi dans le groupe constitué des thioxanthones, des alpha-hydroxycétones, des phosphinoxydes, des acétophénones, des benzophénones, des alpha-aminocétones et des combinaisons arbitraires de deux ou plusieurs des substances susmentionnées.

14. Encre en creux de durcissement par énergie selon l'une quelconque des revendications précédentes, dans laquelle l'encre en creux de durcissement par énergie contient en outre de 5 à 30 % en poids, de préférence de 5 à 25 % en poids et mieux encore de 5 à 20 % en poids de diacrylate de polyéther glycol-200, de diacrylate de polyéther glycol-400, de diacrylate de polyéther glycol-600, de diacrylate de polyéther glycol-800, de diacrylate de polyéther glycol-1000, de diacrylate de PEG300, de diacryalte de triéthylène glycol, de diméthacrylate de triéthyléthylène glycol, de diacrylate de tripropylène glycol TPGDA, de diacrylate de dipropylène glycol DPGDA, de diacrylate de polypropylène glycol (700) PPG700DA, de diméthacrylate éthoxylé (6), propoxylé (12) (12)PO(6)EODMA, de triacrylate de triméthylolpropane éthoxylé (3) TMP3EOTA, de triacrylate de triméthylolpropane éthoxylé (6) TMP6EOTA, de triacrylate de triméthylolpropane éthoxylé (15) TMP15EOTA, de triacrylate de triméthylolpropane éthoxylé (20) TMP20EOTA, de tétraacrylate de pentaérythritol éthoxylé (5) PPTTA, de diacrylate de néopentylglycol propoxylé (2) NPG2PODA, de diacrylate de bisphénol-A éthoxylé (3) BPA3EODA, de diméthacrylate de bisphénol-A éthoxylé (10) BPA10EODMA et/ou de diacrylate de butanediol BDDA, de diacrylate d'hexanediol (HDDA), de triacrylate de glycérylpropoxy (GPTA) et diacrylate de PTMEG.

15. Encre en creux de durcissement par énergie selon l'une des revendications précédentes, qui comprend :
- de 1 à 30 % en poids de l'au moins une colophane modifiée,
- de 1 à 20% en poids de l'au moins un oligomère d'acrylate d'uréthane aliphatique trifonctionnel ou à fonctionnalité supérieure,
- de 5 à 30 % en poids de l'au moins un acrylate de polyester,
de 1 à 5 % en poids d'au moins un agent stabilisant, qui est de préférence choisi dans le groupe constitué du 4-méthoxyphénol, de la tert-butylhydroquinone, de la mono-tert-butylhydroquinone, du butylhydroxytoluène et des combinaisons arbitraires de deux ou plusieurs des substances susmentionnées,
- de 0,1 à 5 % en poids d'au moins un agent dispersant, de 0,1 à 20 % en poids d'au moins un pigment,
de 0 à 50 % en poids d'au moins une charge, qui est de préférence choisie dans le groupe constitué de la craie, du sulfate de baryum, de la silice, du kaolin, du silicate d'aluminium, du sulfate de magnésium et des combinaisons arbitraires de deux ou plusieurs des substances susmentionnées,
- de 0 à 5 % en poids d'au moins une cire, qui est de préférence choisie dans le groupe constitué de la cire de polyéthylène, de la cire de polytétrafluoroéthylène, de la cire de polyamide et des combinaisons arbitraires de deux ou plusieurs des substances susmentionnées,
- de 2 à 12 % en poids d'au moins un photoinitiateur, qui est de préférence choisi dans le groupe constitué des thioxanthones, des alphahydroxycétones, des phosphinoxydes, des acétophénones, des benzophénones, des alpha aminocétones et des combinaisons arbitraires de deux ou plusieurs des substances susmentionnées, et
de 5 à 30% en poids de diacrylate de polyéther glycol-200, de diacrylate de polyéther glycol-400, de diacrylate de polyéther glycol-600, de diacrylate de polyéther glycol-800, de diacrylate de polyéther glycol-1000, de diacrylate de PEG300, de diacryalte de triéthylène glycol, de diméthacrylate de triéthyléthylène glycol, de diacrylate de tripropylène glycol TPGDA, de diacrylate de dipropylène glycol DPGDA, de diacrylate de polypropylène glycol (700) PPG700DA, de diméthacrylate éthoxylé (6), propoxylé (12) (12)PO(6)EODMA, de triacrylate de triméthylolpropane éthoxylé (3) TMP3EOTA, de triacrylate de triméthylolpropane éthoxylé (6) TMP6EOTA, de triacrylate de triméthylolpropane éthoxylé (15) TMP15EOTA, de triacrylate de triméthylolpropane éthoxylé (20) TMP20EOTA, de tétraacrylate de pentaérythritol éthoxylé (5) PPTTA, de diacrylate de néopentylglycol propoxylé (2) NPG2PODA, de diacrylate de bisphénol-A éthoxylé (3) BPA3EODA, de diméthacrylate de bisphénol-A éthoxylé (10) BPA10EODMA et/ou de diacrylate de butanediol BDDA, de diacrylate d'hexanediol (HDDA), de triacrylate de glycérylpropoxy (GPTA) et diacrylate de PTMEG.
